# FASCICULE DE BREVET EUROPEEN

(11) **EP 1 065 662 B1**
(45) Date de publication et mention de la délivrance du brevet: **03.09.2008**
(21) Numéro de dépôt: 00401533.5
(22) Date de dépôt: 31.05.2000
(51) Int. Cl.: G11B 7/09

(54) **Procédé et dispositif pour l'asservissement d'un faisceau optique incident sur une piste d'un support mobile d'informations, en particulier un disque numérique à vitesse de rotation élevée**
Verfahren und Vorrichtung zur Servosteuerung eines Lichtstrahls, der auf einer Spur eines beweglichen Datenträgers, insbesondere einer digitalen Platte mit hoher Rotationsgeschwindigkeit, gerichtet ist
Method and device for controlling an optical beam incident on a movable data carrier track, in particular a digital disk with a high rotation speed

(30) Priorité: 28.06.1999 FR 9908239
(43) Date de publication de la demande: 03.01.2001
(73) Titulaire: STMicroelectronics S.A., 92120 Montrouge (FR)
(72) Inventeur: Marrec, Sonia, 38240 Meylan (FR); Lebowsky, Fritz, 38410 Corps d'Uriage (FR)
(74) Mandataire: Casalonga, Axel

(56) Documents cités:
- EP-A- 0 883 114
- DE-A- 3 214 951
- PATENT ABSTRACTS OF JAPAN vol. 018, no. 293 (P-1747), 3 juin 1994 (1994-06-03) & JP 06 052558 A (SHARP CORP), 25 février 1994 (1994-02-25)
- PATENT ABSTRACTS OF JAPAN vol. 013, no. 001 (P-808), 6 janvier 1989 (1989-01-06) & JP 63 211127 A (SEIKO EPSON CORP), 2 septembre 1988 (1988-09-02)

## Description

L'invention concerne l'asservissement d'un faisceau optique incident sur une piste d'un support mobile d'informations contenues dans ladite piste, et plus particulièrement le contrôle et la détermination de l'erreur de positionnement du faisceau incident par rapport à la piste.

L'invention s'applique avantageusement mais non limitativement à des disques numériques, notamment ceux connus sous le vocable de "disque compact" (CD-ROM : "Read Only Memory Compact Disc" en langue anglaise) et tout particulièrement les disques numériques multifonctions (DVD : "Digital Versatile Disc" en langue anglaise) stockant de façon comprimée des données d'image par exemple.

Un disque numérique comporte une seule piste en spirale dont le relief est représentatif des informations binaires stockées sur la piste du disque. On éclaire par un faisceau optique incident, par exemple un spot laser, la piste du disque et plusieurs photodétecteurs, par exemple quatre, détectent la réflexion du faisceau lumineux sur le disque.

Le capteur optique, formé des photodétecteurs, délivre alors quatre signaux élémentaires respectivement délivrés par les quatre photodétecteurs, ainsi qu'un signal global, ou signal utile, égal à la somme des quatre signaux élémentaires, signal utile d'où l'on extrait les informations binaires lues sur la piste.

L'asservissement du faisceau optique sur la piste du disque mobile en rotation s'effectue à partir des quatre signaux élémentaires délivrés par les photodétecteurs comme il est connu du document EP-A-0 883 114. Dans une solution analogique, on somme les signaux par paires de façon à former deux signaux que l'on égalise dans un égaliseur analogique avant de les mettre en forme, par comparaison avec un seuil, dans deux comparateurs. Les deux signaux ainsi mis en forme sont mutuellement déphasés si le spot laser ne se situe pas sur la piste. On détecte alors la différence de phase entre ces deux signaux, différence de phase qui correspond à l'erreur de positionnement du faisceau par rapport à la piste. Cette erreur de positionnement est alors utilisée classiquement dans une boucle d'asservissement pour modifier le système optique incident et ramener et asservir le faisceau optique sur la piste.

D'une façon générale, une telle solution analogique présente l'inconvénient de nécessiter un nombre important de composants analogiques, ce qui est relativement pénalisant d'un point de vue encombrement. Par ailleurs, ce nombre de composants est d'autant plus important que la bande utile des signaux comporte des fréquences élevées, conduisant ainsi notamment à une consommation importante. Par ailleurs, lorsque la technologie évolue, la modification et la réalisation des nouveaux composants du dispositif nécessitent un temps de conception et de réalisation important.

Une autre solution consiste à utiliser une approche numérique visant à échantillonner les signaux issus des photodétecteurs avant un traitement numérique comportant notamment le calcul des déphasages. Afin d'éviter un repliement du spectre lors de l'échantillonnage, la fréquence d'échantillonnage doit être au moins deux fois plus élevée que la fréquence maximale de la bande de fréquence du signal utile contenant les informations.

Lorsque la fréquence d'échantillonnage est le double de ladite fréquence maximale de la bande utile, le nombre d'échantillons ne permet pas d'obtenir, par une simple interpolation entre ces échantillons, une valeur de déphasage correcte dans les plages de fréquences élevées proches du maximum de fréquence. Une solution consiste alors à reconstituer numériquement l'intégralité des signaux à partir des échantillons. Cependant, ceci nécessite des traitements numériques complexes et coûteux à mettre en oeuvre, comportant notamment des traitements de décodage de Viterbi.

L'invention vise à apporter une solution à ce problème.

Un but de l'invention est de proposer une solution numérique simple utilisant notamment une simple interpolation entre échantillons, pour calculer l'erreur de positionnement du faisceau par rapport à la piste du support mobile en rotation, notamment lorsque la fréquence maximale de la bande utile des informations est égale à la moitié de la fréquence d'échantillonnage.

Une telle configuration se produit dans certaines applications lorsque la vitesse de rotation du support mobile est très élevée, par exemple 12 x (une vitesse de rotation de 1 x correspondant à 4 m/s). On obtient alors des fréquences maximales voisines de 60 MHz. Par ailleurs, avec les technologies semi-conductrices actuelles, par exemple une technologie 0,25 micron, certains composants ne peuvent pas travailler correctement à des fréquences supérieures à 120 MHz. La fréquence d'échantillonnage est donc de ce fait limitée à cette fréquence.

L'invention propose donc un procédé pour l'asservissement d'un faisceau optique incident sur une piste d'un support mobile d'informations contenues dans ladite piste. Selon une caractéristique générale de l'invention, on capte le faisceau réfléchi par le support mobile (par exemple le disque DVD) au moyen d'un capteur optique comprenant plusieurs photodétecteurs (au moins deux et en pratique quatre) et on élabore à partir des signaux élémentaires respectivement délivrés par lesdits photodétecteurs deux signaux secondaires, échantillonnés et filtrés par un filtre passe-bas ayant une fréquence de coupure au plus égale au quart de la fréquence d'échantillonnage, le déphasage mutuel entre ces deux signaux secondaires échantillonnés et filtrés étant représentatif de l'erreur de positionnement du faisceau par rapport à la piste. Par ailleurs, la détermination d'une valeur du déphasage mutuel comprend :
- la sélection, pour chaque signal secondaire, d'au moins une paire d'échantillons situés à l'extérieur d'une plage d'amplitude prédéterminée autour d'un seuil prédéterminé (par exemple la valeur zéro), ces deux paires d'échantillons permettant de repérer respectivement pour les deux signaux secondaires, deux transitions de ces signaux secondaires par rapport au seuil et correspondant à un même sens de franchissement du seuil,
- la détermination des deux transitions par interpolation à partir des échantillons sélectionnés, et
- la détermination de l'écart temporel entre les deux transitions.

L'utilisation d'un filtre passe-bas dont la fréquence de coupure est au plus égale au quart de la fréquence d'échantillonnage, permet d'obtenir un nombre suffisant d'échantillons afin de calculer le déphasage par simple interpolation. Ceci étant, le filtre passe-bas élimine les fréquences hautes du spectre de fréquences. Il en résulte donc une suppression théorique de ces fréquences, et en pratique, une atténuation sensible locale de l'amplitude des signaux. En pratique, les signaux échantillonnés et filtrés sont bruités et, le fait de repérer, pour chaque signal secondaire, une transition de ce signal par rapport à un seuil (par exemple la valeur zéro), en utilisant au moins une paire d'échantillons situés à l'extérieur d'une plage d'amplitude prédéterminée autour de ce seuil, permet de ne pas tenir compte d'échantillons dont les niveaux ou amplitudes se situeraient à l'intérieur de cette plage prédéterminée et dont la prise en compte pourrait conduire à des obtentions érronées de transition en raison de la présence du bruit.

Bien entendu, l'homme du métier peut choisir une fréquence de coupure du filtre passe-bas plus basse qu'un quart de la fréquence d'échantillonnage. L'ajustement de cette fréquence de coupure du filtre passe-bas sera effectué par l'homme du métier en fonction de l'application et de la précision souhaitées. En pratique, il est préférable de choisir une fréquence de coupure du filtre passe-bas qui ne soit pas inférieure au cinquième de la fréquence maximale de la bande utile, c'est-à-dire au dixième de la fréquence d'échantillonnage, de façon à ne pas éliminer un trop grand nombre d'échantillons, ce qui conduirait alors à une dégradation de la précision du calcul de déphasage.

De même, l'homme du métier saura ajuster la valeur de l'amplitude de ladite plage autour du seuil prédéterminé en fonction de l'application et notamment du niveau de bruit des signaux. A titre indicatif, une façon expérimentale de déterminer la valeur de l'amplitude de ladite plage consiste, lors d'une calibration du système, à examiner l'évolution du déphasage (erreur de positionnement) en boucle ouverte. En effet, l'homme du métier sait qu'en raison de l'excentricité du disque, la courbe théorique du déphasage, c'est-à-dire de l'erreur de positionnement, présente en boucle ouverte une configuration en dent de scie. Une valeur d'amplitude trop faible pour ladite plage conduit alors à une courbe de calibration très bruitée ressemblant difficilement à la courbe théorique. A l'inverse, une valeur d'amplitude trop élevée pour ladite plage conduit à l'obtention d'un trop petit nombre de valeurs obtenues pour l'erreur de positionnement, ne permettant également pas de retrouver la courbe théorique d'évolution de l'erreur de positionnement.

Il a été observé qu'il était préférable que l'amplitude de ladite plage soit au moins égale au produit de l'amplitude maximale des signaux secondaires par le rapport bruit/signal, et également de préférence inférieure à la moitié de l'amplitude maximale des signaux secondaires.

L'invention résulte notamment de l'observation qu'alors que la majorité des informations contenues dans les signaux ont des fréquences se situant entre la fréquence de coupure du filtre passe-bas et la fréquence d'échantillonnage, il s'avère néanmoins possible de s'affranchir de ces informations pour le calcul du déphasage, et donc de l'erreur de positionnement, et de n'utiliser que les informations ayant des fréquences inférieures à la fréquence de coupure du filtre passe-bas, pour calculer l'erreur de positionnement. Ainsi, compte tenu notamment du fait que l'asservissement du faisceau sur la piste s'effectue à basse fréquence (par exemple de l'ordre de quelques dizaines de kHz) par rapport à la fréquence maximale des signaux issus des photodétecteurs, la précision obtenue selon l'invention pour le calcul du déphasage, de par la prise en compte que d'une partie seulement des échantillons, est largement compatible avec cet asservissement à basse fréquence. Ainsi, pour un DVD tournant à 12 x, 70% des fréquences se situent au-dessus de 30 MHz et sont comprises entre 30 et 60 MHz. L'invention permet donc de n'utiliser que 30% de ces fréquences pour le calcul de l'erreur de positionnement.

Ainsi, l'invention permet-elle, de façon très simple, et en utilisant notamment des interpolations, par exemple linéaires, pour calculer les transitions, d'asservir avec une précision tout à fait compatible avec les exigences requises, un faisceau optique sur une piste d'un support mobile en rotation dont les signaux issus des photodétecteurs contiennent des informations à des fréquences allant jusqu'à la moitié de la fréquence d'échantillonnage.

Bien entendu, l'invention s'appliquerait également à des disques tournant à des vitesses beaucoup plus faibles et pour lesquels les fréquences de la bande utile ne dépasseraient pas le quart de la fréquence d'échantillonnage. Le nombre d'échantillons sélectionnables serait alors simplement plus important.

Selon un mode de mise en oeuvre de l'invention, pour chaque signal secondaire, les échantillons sélectionnés permettant le repérage de la transition, comportent une paire d'échantillons situés de part et d'autre du seuil prédéterminé, à l'extérieur de la plage prédéterminée et constituant respectivement un minimum et un maximum local consécutifs du signal secondaire. Par ailleurs, afin de minimiser les erreurs dans la sélection, l'ordre de l'occurence temporelle du minimum local et du maximum local doit être le même pour les deux paires d'échantillons relatives aux deux signaux secondaires. En d'autres termes, si pour un signal secondaire on sélectionne d'abord un minimum local puis un maximum local afin de repérer une transition de ce signal secondaire, la sélection des deux extrémas locaux de l'autre signal secondaire ne sera alors valide que si, pour cet autre signal secondaire, on repère également d'abord un minimum local puis un maximum local.

Il serait bien entendu possible, notamment si la fréquence d'échantillonnage est suffisamment élevée, de n'utiliser que ces deux extréma locaux pour calculer chaque transition du signal secondaire. Ceci étant, il est préférable, dans un but d'augmenter encore la précision de calcul de la transition du signal secondaire par rapport au seuil, que la détermination de la transition, pour chaque signal secondaire, comporte la mémorisation de ladite paire d'échantillons constituant respectivement un minimum local et un maximum local consécutifs du signal secondaire, mais également la mémorisation des échantillons intermédiaires situés entre ces échantillons extrêmes. Puis, on sélectionne parmi ces échantillons intermédiaires, les deux échantillons intermédiaires situés de part et d'autre du seuil prédéterminé et au voisinage de ce seuil. On effectue alors une interpolation, par exemple linéaire, entre ces deux échantillons intermédiaires sélectionnés de façon à obtenir un échantillon calculé dont le niveau correspond audit seuil. Cet échantillon calculé, dont il est aisément possible de déterminer l'occurence temporelle, matérialise alors pour ce signal secondaire ladite transition par rapport au seuil.

La variante utilisant les extrémas locaux pour la sélection de la paire d'échantillons située à l'extérieur de la plage d'amplitude prédéterminée autour du seuil prédéterminé et permettant de repérer la transition d'un signal secondaire, n'est qu'une possibilité de sélection.

Une autre possibilité pour sélectionner pour chaque signal secondaire ladite paire d'échantillons située à l'extérieur de la plage d'amplitude prédéterminée autour du seuil prédéterminé afin de repérer pour ce signal secondaire une transition, est d'utiliser le signal global contenant les informations et délivré par le capteur. Ce signal global qui est en pratique la somme des signaux élémentaires délivrés par les photodétecteurs, n'était jusqu'à maintenant utilisé que pour l'extraction des données. Or, il a été observé que les transitions de ce signal global par rapport au seuil se situent toujours entre les deux signaux secondaires et au milieu de ceux-ci. Ainsi, ce signal global, et plus particulièrement ces transitions par rapport au seuil prédéterminé, peuvent servir de référence de phase. Plus précisément, le fait de sélectionner deux échantillons qui encadrent à peu près symétriquement une transition du signal global, assure, d'une part, que ces deux échantillons sélectionnés appartiennent bien aux deux signaux secondaires, et, d'autre part, que le calcul du déphasage à partir de ces deux échantillons sélectionnés, conduira à une estimation correcte de l'erreur de positionnement.

Ainsi, l'utilisation de ce signal global délivré par le capteur et contenant lesdites informations, peut éventuellement permettre de sélectionner la paire d'échantillons située à l'extérieur de la plage prédéterminée, mais permet également de contrôler éventuellement la sélection de ces échantillons s'ils ont été par exemple sélectionnés par la méthode des extréma locaux. En effet, les deux échantillons calculés par interpolation doivent alors également encadrer à peu près symétriquement, à une tolérance près, une transition du signal global.

L'invention a également pour objet un dispositif pour l'asservissement d'un faisceau optique incident sur une piste d'un support mobile d'informations contenues dans ladite piste.

Selon une caractéristique générale de l'invention, ce dispositif comprend un capteur apte à capter le faisceau réfléchi par le support mobile et comportant plusieurs photodétecteurs, un premier étage de traitement relié au capteur et comportant des moyens d'échantillonnage et des moyens de filtrage passe-bas ayant une fréquence de coupure au plus égale au quart de la fréquence d'échantillonnage. Ce premier étage est apte à élaborer à partir des signaux élémentaires respectivement délivrés par les photodétecteurs, deux signaux secondaires, échantillonnés et filtrés, dont le déphasage mutuel est représentatif de l'erreur de positionnement du faisceau par rapport à ladite piste.

Le dispositif d'asservissement comporte également un deuxième étage de traitement, relié à la sortie du premier étage, et comportant :
- des moyens de sélection aptes à sélectionner, pour chaque signal secondaire, au moins une paire d'échantillons situés à l'extérieur d'une plage d'amplitude prédéterminée autour d'un seuil prédéterminé, les échantillons sélectionnés permettant de repérer respectivement pour les deux signaux secondaires, deux transitions de ces signaux secondaires par rapport au seuil et correspondant à un même sens de franchissement du seuil,
- des moyens d'élaboration aptes à déterminer les deux transitions par interpolation à partir des échantillons sélectionnés, et
- des moyens de calcul aptes à déterminer l'écart temporel entre les deux transitions, de façon à déterminer une valeur du déphasage mutuel.

Selon un mode de réalisation de l'invention, le deuxième étage de traitement comporte des moyens de mémoire aptes à mémoriser les échantillons sélectionnés pour chaque signal secondaire.

Par ailleurs, les échantillons sélectionnés permettant le repérage de la transition, comportent une paire d'échantillons situés de part et d'autre du seuil prédéterminé, à l'extérieur de la plage prédéterminée, et constituant respectivement un minimum local et un maximum local consécutifs du signal secondaire, l'ordre de l'occurence temporelle du minimum local et du maximum local étant le même pour les deux paires d'échantillons relatives aux deux signaux secondaires.

Les moyens d'élaboration sont aptes à stocker dans les moyens de mémoire, pour chaque signal secondaire, les échantillons intermédiaires situés entre ces échantillons extrêmes, puis à sélectionner parmi ces échantillons intermédiaires, les deux échantillons intermédiaires situés de part et d'autre du seuil prédéterminé et au voisinage de ce seuil.

Les moyens d'élaboration comportent par ailleurs des moyens d'interpolation aptes à effectuer une interpolation entre les deux échantillons intermédiaires sélectionnés de chaque signal secondaire, de façon à déterminer, pour chaque signal secondaire, un échantillon calculé dont le niveau correspond audit seuil.

Enfin, les moyens de calcul déterminent l'erreur de positionnement à partir des deux échantillons calculés.

Il est par ailleurs particulièrement avantageux, dans le but de s'affranchir davantage des erreurs dues au bruit, que le deuxième étage de traitement comporte un filtre médian, par exemple de longueur trois, relié à la sortie des moyens de calcul, suivi d'un filtre interpolateur.

D'autres avantages et caractéristiques de l'invention apparaîtront à l'examen de la description détaillée de modes de réalisation et de mise en oeuvre, nullement limitatifs, et des dessins annexés, sur lesquels :
- la figure 1 illustre très schématiquement l'architecture matérielle d'un premier mode de réalisation d'un dispositif selon l'invention;
- la figure 2 illustre plus en détail une partie du dispositif de la figure 1;
- la figure 3 illustre schématiquement l'évolution temporelle d'un signal secondaire permettant une mise en oeuvre du procédé selon l'invention;
- la figure 4 illustre le calcul d'une valeur du déphasage temporel;
- la figure 5 illustre schématiquement une autre étape du procédé selon l'invention; et
- les figures 6 à 8 illustrent schématiquement une autre variante de réalisation et de mise en oeuvre de l'invention.

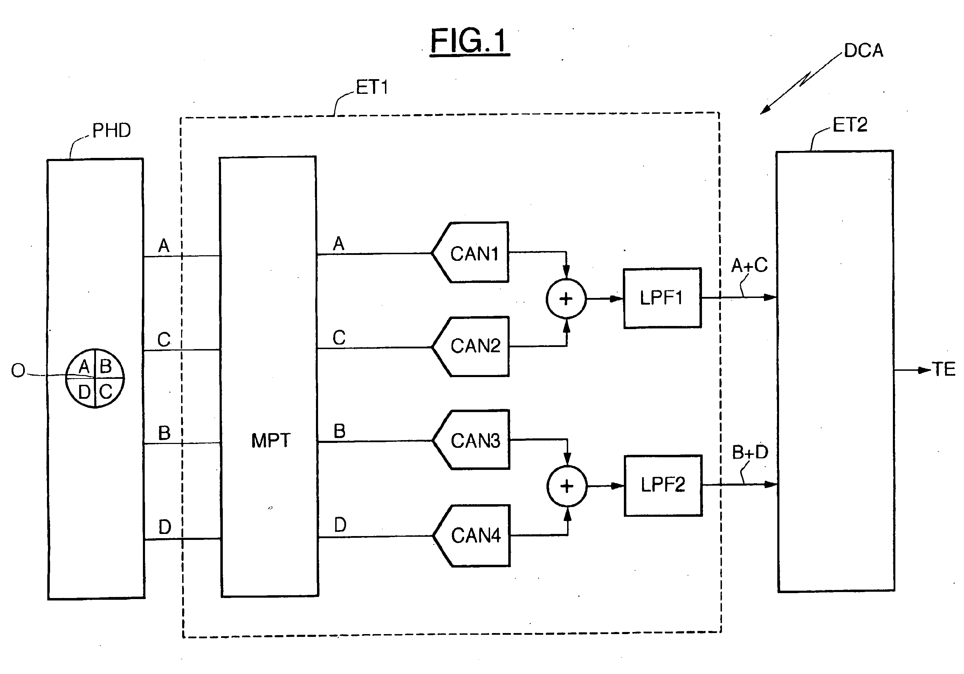

Sur la figure 1, la référence DCA désigne plus particulièrement un dispositif de contrôle d'asservissement selon l'invention, comportant en tête un capteur PHD composé de quatre photodétecteurs A,B,C,D. En pratique, une diode laser émet un faisceau laser qui est dirigé vers la face du disque sur laquelle est gravée la piste contenant les informations, par l'intermédiaire notamment d'une lame séparatrice et d'un système optique classique. Le faisceau réfléchi par le disque traverse alors dans l'autre sens la lame séparatrice et est capté par les quatre photodétecteurs A,B,C,D qui se situent tous les quatre dans un plan parallèle au plan du disque. Chaque photodétecteur délivre un signal que l'on a référencé, à des fins de simplification, par la même lettre que celle affectée au photodétecteur. Ces signaux élémentaires A,B,C,D sont ensuite traités dans un premier étage de traitement ET 1 comprenant en tête des moyens de prétraitement MPT comportant notamment des amplificateurs, ces moyens de prétraitement étant de structure connue en soi.

Ces signaux A,C,B,D délivrés par les moyens de prétraitement MPT sont ensuite échantillonnés dans quatre convertisseurs analogiques numériques CAN1-CAN4. Le signal d'horloge d'échantillonnage est délivré par exemple par un quartz (non représenté ici à des fins de simplification). La fréquence du signal d'échantillonnage est par exemple égale à 120 MHz.

On somme, ensuite, dans deux additionneurs, les deux signaux élémentaires qui sont issus des deux photodétecteurs symétriques par rapport au centre O du capteur. Ainsi, l'un des signaux secondaires est égal à la somme des signaux élémentaires A et C, tandis que l'autre signal secondaire est égal à la somme des signaux élémentaires B et D.

Les signaux sommés sont ensuite filtrés respectivement dans deux filtres passe-bas de structure identique LPF1 et LPF2. La fréquence de coupure de ces filtre passe-bas est au plus égale à 1/4 de la fréquence d'échantillonnage. Dans le cas présent, cette fréquence de coupure est égale à 1/4 de la fréquence d'échantillonnage, soit 30 MHz.

L'étage de traitement ET1 fournit donc deux signaux secondaires échantillonnés et filtrés, A+C et B+D, dont le déphasage mutuel est représentatif de l'erreur de positionnement du faisceau optique par rapport à la piste du disque.

Sur la figure 1, on a représenté les additionneurs et les filtres en aval des convertisseurs. Ceci étant, il serait également possible de sommer et de filtrer les signaux en amont des convertisseurs analogiques numériques.

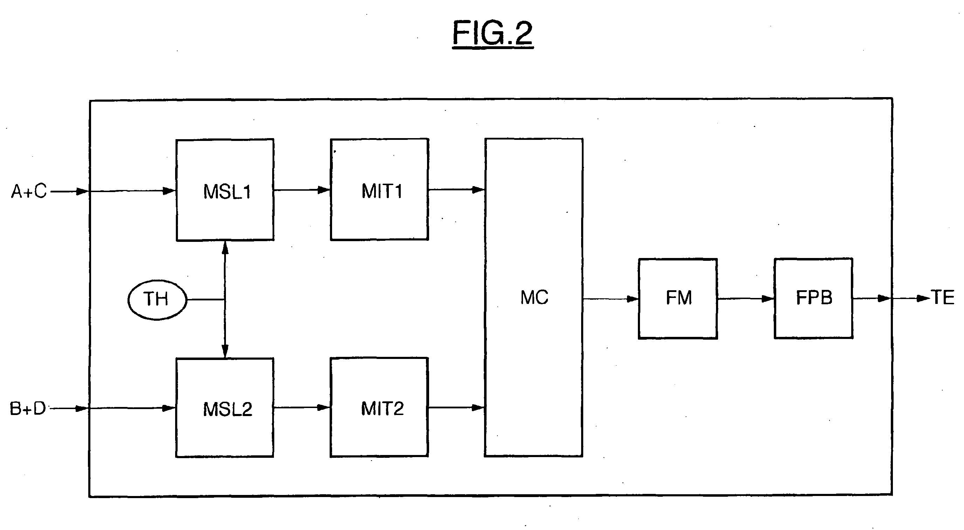

Les signaux secondaires échantillonnés et filtrés A+C et B+D, qui sont par ailleurs également bruités, sont délivrés à un deuxième étage de traitement ET2 qui va déterminer l'erreur de positionnement TE du faisceau par rapport à la piste. La structure de ce deuxième étage de traitement ET2 est maintenant décrite plus en détail en se référant plus particulièrement à la figure 2.

Le deuxième étage de traitement ET2 comporte essentiellement des moyens de sélection MSL1 et MSL2 recevant les échantillons des signaux A+C et B+D, respectivement.

L'étage ET2 comporte par ailleurs des moyens dits "d'interpolation" MIT 1 et MIT2 reliés à la sortie des moyens de sélection MSL1 et MSL2, la sortie de ces moyens d'interpolation étant reliée à des moyens de calcul MC. Enfin, un filtre médian FM de longueur trois, de structure connue en soi, est relié à la sortie des moyens de calcul et est suivi par un filtre interpolateur FPB, typiquement un filtre passe-bas. Ce filtre FPB délivre l'erreur de positionnement TE.

Les moyens de sélection d'interpolation et de calcul notamment vont maintenant être décrits fonctionnellement, leur réalisation pouvant être effectuée de façon logicielle au sein d'un contrôleur par exemple. Les différents filtres peuvent être quant à eux également réalisés de façon logicielle ou bien par des circuits intégrés spécifiques.

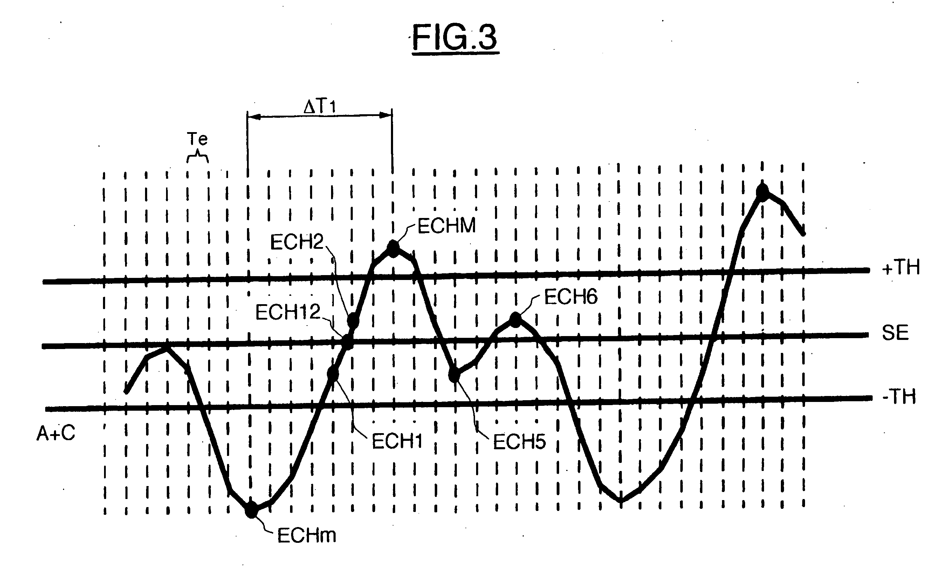

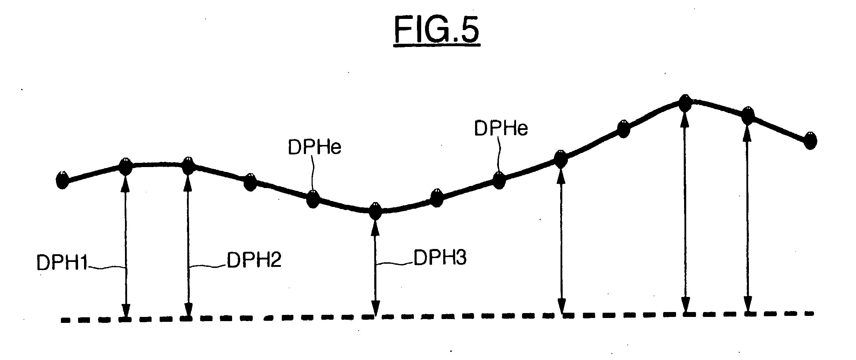

On fait maintenant référence plus particulièrement aux figures 3 à 6 pour décrire le fonctionnement des différents moyens selon l'invention, ainsi qu'une mise en oeuvre du procédé selon l'invention.

Sur la figure 3, les tiretés verticaux représentent les différents fronts montants du signal d'horloge d'échantillonnage, l'écart temporel entre deux fronts montants représentant la période d'échantillonnage Te.

Sur la figure 3, on a représenté uniquement le signal échantillonné et filtré A+C. Le deuxième signal secondaire B+D est en fait temporellement décalé (déphasé) par rapport au signal A+C lorsque le faisceau laser ne se situe pas sur la piste du disque.

Afin de déterminer une valeur du déphasage mutuel entre ces deux signaux secondaires A+C d'une part et B+D d'autre part, on va déterminer pour chacun de ces deux signaux secondaires, une transition par rapport à un seuil prédéterminé SE, par exemple la valeur 0 (une transition est ici un franchissement du seuil).

Un paramètre permettant de sélectionner les échantillons à partir desquels on va repérer une transition du signal secondaire, est une plage d'amplitude prédéterminée ± TH. L'amplitude de cette plage dépend généralement du niveau de bruit entachant les signaux élémentaires. En pratique, on choisira une amplitude TH de la plage égale au rapport bruit/signal. Ainsi, en pratique, si chacun des signaux secondaires A+C et B+D a une amplitude normalisée comprise entre -1 et +1, la valeur TH sera égale au rapport bruit/signal, par exemple de 3 à 5% du signal utile correspondant à un rapport bruit/signal de 20 à 30 dB. En d'autres termes, la valeur TH sera par exemple prise égale à 0,05.

On décrit maintenant le fonctionnement du dispositif pour le signal A+C, étant entendu que ce fonctionnement est identique pour le signal B+D.

Un certain nombre d'échantillons du signal secondaire est en permanence stocké dans des moyens de mémoire, par exemple une mémoire du type "premier entré-premier sorti" (FIFO en langue anglaise) dont la taille détermine le nombre d'échantillons stockés en permanence. On reviendra plus en détail ci-après sur cette taille.

Les moyens de sélection MSL1 vont alors repérer un extremum local du signal A+C, par exemple un minimum local ECHm. Le repérage d'un minimum local ou d'un maximum local s'effectue de façon classique et connue en soi en observant le signe de la dérivée temporelle du signal en ce point.

Seul un minimum local situé en-dehors de la plage prédéterminée, c'est-à-dire dont le niveau se situe en l'espèce en dessous de la valeur -TH, est sélectionné.

A partir de là, les moyens de sélection vont rechercher parmi les échantillons ultérieurement délivrés du signal A+C, un maximum local ECHM se situant également en-dehors de la plage prédéterminée, c'est-à-dire dont le niveau est supérieur à la valeur +TH.

L'écart temporel ΔT1 entre le minimum local ECHm et le maximum local ECHM, définit alors une fenêtre de sélection à l'intérieur de laquelle on va sélectionner, parmi les échantillons intermédiaires mémorisés, les deux échantillons ECH1 et ECH2 se situant de part et d'autre du seuil SE et au voisinage de celui-ci. En pratique, on choisit les deux échantillons les plus proches du seuil SE.

Les moyens d'interpolation effectuent alors une interpolation, par exemple linéaire entre ces deux échantillons ECH 1 et ECH2, de façon à déterminer un échantillon intermédiaire calculé ECH12 dont le niveau est égal audit seuil et qui matérialise la transition du signal A+C.

La taille de la mémoire stockant les échantillons est en pratique égale à une période de la fréquence la plus basse du spectre de fréquence utile. Ceci permet, si l'on a repéré un minimum local ECHm correspondant à la fréquence la plus basse, de pouvoir repérer le maximum local suivant. Si, par contre, aucun maximum local situé à l'extérieur de la plage n'est repéré dans la fenêtre de sélection, après que le minimum local a été repéré, le minimum local précédemment repéré est alors écrasé dans la mémoire et le processus de sélection recommence.

On voit sur la figure 3 que les échantillons ECH5 et ECH6 constituent respectivement également un minium et un maximum locaux. Cependant, ceux-ci sont situés à l'intérieur de la plage prédéterminée. Ils ne seront donc pas pris en compte pour le repérage d'une transition du signal A+C afin d'éviter toute erreur due à la présence du bruit.

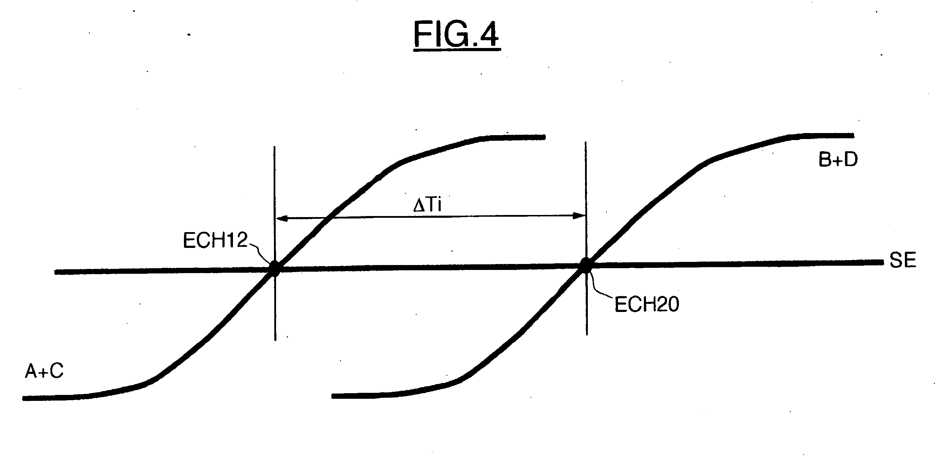

Parallèlement à la détermination de l'échantillon intermédiaire calculé ECH12, les moyens de sélection MSL2 et MIT2 déterminent un échantillon homologue calculé ECH20 (figure 4) correspondant à une transition du signal secondaire B+D. A cet égard, il convient de noter que si on a tout d'abord repéré un minimum local puis un maximum local pour le signal A+C, on sélectionnera pour le signal B+D, les deux échantillons extrêmes correspondant également à l'apparition d'un minimum suivi d'un maximum.

L'interpolation a permis de connaître précisément la durée séparant chaque échantillon calculé du front montant précédant ou suivant cet échantillon calculé. En conséquence, les moyens de calcul MC peuvent en déduire l'écart temporel ΔTi séparant les deux échantillons ECH12 et ECH20, et séparant par conséquent les deux transitions des signaux secondaires A+C et B+D.

L'erreur de positionnement TE sera alors proportionnelle à cette valeur ΔTi.

Les différentes valeurs ΔTi délivrées par les moyens de calcul sont ensuite traitées dans le filtre médian FM de longueur trois, qui a pour effet de supprimer les valeurs extrêmes de chaque triplet de valeurs délivrées par les moyens de calcul MC. En effet, un filtre médian de longueur 3 agit sur une fenêtre glissante de taille 3, sur les échantillons délivrés par les moyens de calcul MC et stockés dans une mémoire. Plus précisément, le filtre médian sélectionne à l'intérieur d'une fenêtre glissante de 3 échantillons stockés, l'échantillon de niveau médian, et le délivre en sortie.

L'utilisation d'un filtre médian permet ainsi de minimiser encore les erreurs de calcul de déphasage dues à la présence du bruit. Par ailleurs, l'utilisation d'un filtre passe-bas en combinaison avec une plage "interdite" pour les échantillons sélectionnés permet d'utiliser un filtre médian de longueur réduite, en particulier de longueur 3 qui est un filtre médian simple à réaliser.

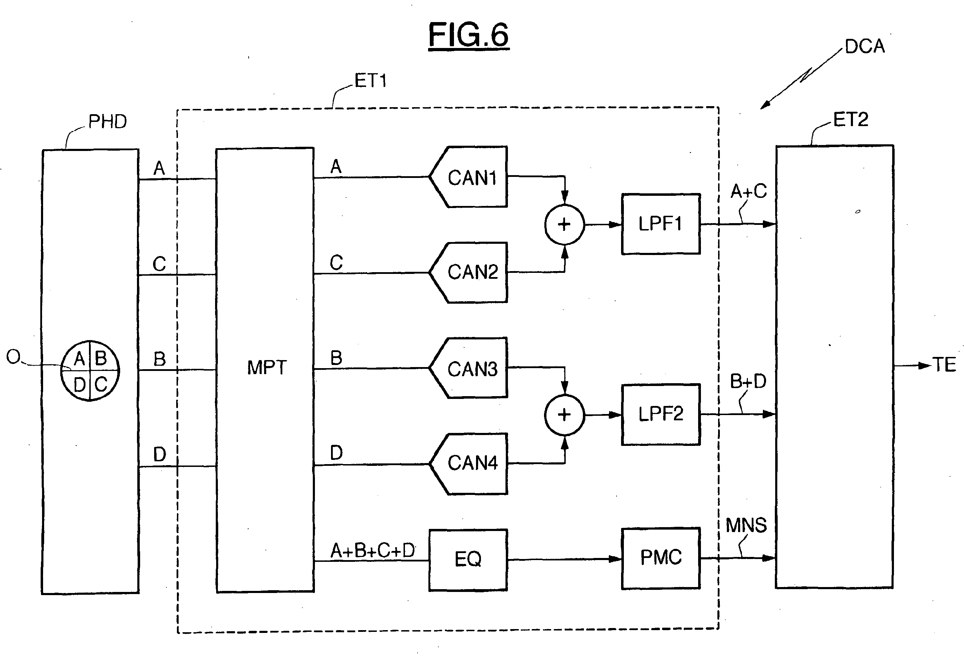

Les valeurs successives de déphasage DPHi entre les signaux A+C et B+D, délivrées par le filtre médian FM, sont délivrées au filtre interpolateur FPB (figure 6). Ce filtre a notamment pour fonction de calculer par interpolation des valeurs de déphasage interpolées DPHe à partir de valeurs effectivement calculées par les moyens de calcul et filtrées par le filtre médian, lorsque ces valeurs de déphasage ne sont pas disponibles. C'est le cas par exemple lorsque l'un des signaux secondaires est momentanément inexploitable.

En d'autres termes, ce filtre FPB permet de délivrer de façon régulière des valeurs de déphasage, représentatives de l'erreur de positionnement du faisceau sur la piste, et qui vont permettre de corriger cette position et d'asservir en permanence le faisceau optique sur la piste du disque en rotation.

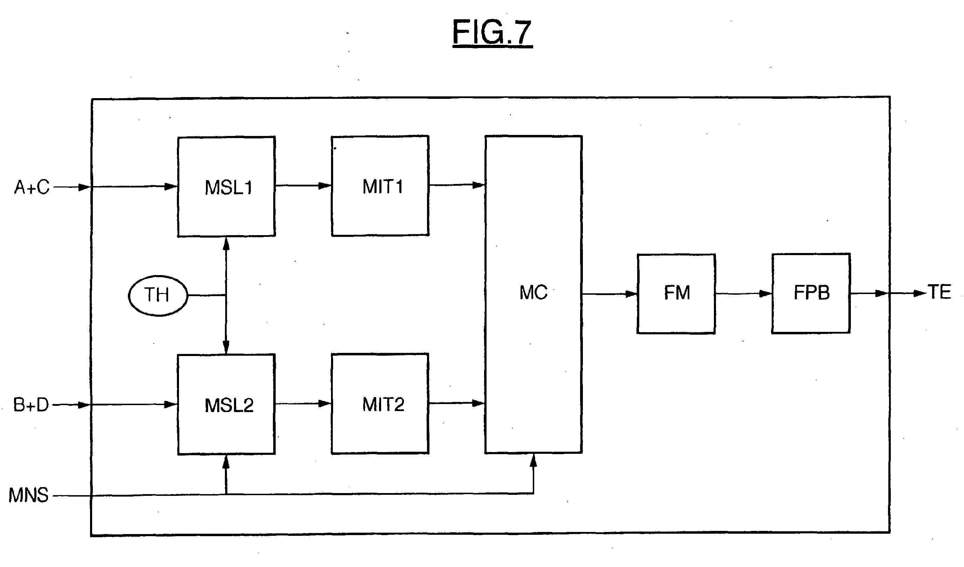

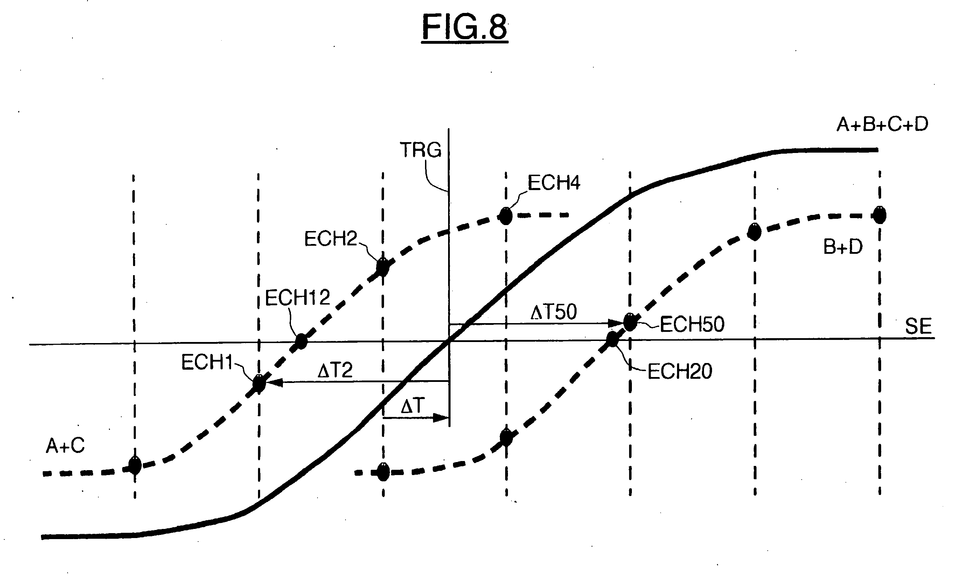

On fait donc référence plus particulièrement aux figures 6 à 8 pour illustrer une autre variante de l'invention.

En pratique, les moyens de prétraitement délivrent également un signal global ou signal utile, égal à la somme des quatre signaux élémentaires A,B,C et D. C'est à partir de ce signal utile que seront notamment extraites les informations contenues dans la piste.

Le signal d'horloge d'échantillonnage est également utilisé par une boucle numérique à verrouillage de phase PMC, de structure connue en soi. Cette boucle numérique PMC reçoit le signal global égalisé après passage dans un égaliseur EQ, également de structure connue en soi.

Les moyens PMC reçoivent également le signal d'horloge d'échantillonnage et élaborent un signal d'échantillonnage auxiliaire dont la période T_{PMC} est égale à Te/n où Te est la période du signal d'horloge d'échantillonnage et n un entier. Ces moyens PMC détectent toute transition du signal global par rapport au seuil prédéterminé SE et déterminent dans quel intervalle du signal d'échantillonnage auxiliaire se situe ladite transition. Plus précisément, les moyens PMC délivrent en sortie un mot numérique MNS représentatif de la distance ΔT entre toute transition détectée du signal global et le front montant du signal d'horloge immédiatement précédent. En pratique, à titre d'exemple, si la boucle à verrouillage de phase comporte typiquement 32 inverseurs permettant de subdiviser la période Te du signal d'horloge d'échantillonnage en 32 intervalles (n = 32), les moyens PMC vont délivrer un mot de cinq bits représentant le numéro de l'intervalle dans lequel se situe la transition, c'est-à-dire en fait la distance entre le front montant du signal d'horloge d'échantillonnage et la transition du signal. Ainsi, un mot numérique égal à 00000 sera représentatif d'une transition en phase avec le front montant du signal d'horloge, tandis qu'un mot numérique égal à 11111 sera représentatif d'une transition se situant juste avant le front montant suivant du signal d'horloge.

Le signal global A+B+C+D, et plus particulièrement la présence de la transition TRG, permet ainsi de contrôler et de valider la sélection des échantillons intermédiaires situés de part et d'autre du seuil SE (à partir desquels seront calculées les transitions des signaux secondaires), et par conséquent de contrôler et de valider la sélection des extremas locaux.

Plus précisément, si ΔT2 désigne l'écart temporel entre la transition TRG du signal global et l'échantillon intermédiaire ECH1 du signal A+C, et si ΔT50 désigne l'écart temporel entre l'échantillon intermédiaire ECH50 du signal B+D (à partir duquel sera calculé l'échantillon intermédiaire ECH20), la sélection des échantillons et le calcul des transitions seront contrôlés et validés si les valeurs ΔT2 et ΔT50 sont sensiblement égales.

L'invention permet ainsi de s'affranchir de l'utilisation d'égaliseurs analogiques sur les voies de traitement des signaux élémentaires issus des photodétecteurs. Il est ainsi possible d'intégrer tous les composants des moyens de contrôle d'asservissement sur un même circuit qui est à même de s'adapter très facilement aux évolutions technologiques.

Bien entendu, la réalisation des moyens de traitement qui a été décrite plus haut de façon logicielle peut également être effectuée par des composants logiques sous forme de circuit intégré en utilisant notamment des logiciels classiques de synthèse automatique logique.

## Revendications

1. Procédé pour l'asservissement d'un faisceau optique incident sur une piste d'un support mobile d'informations contenues dans ladite piste, **caractérisé par le fait qu'**on capte le faisceau réfléchi par le support mobile au moyen d'un capteur optique (PHD) comportant plusieurs photodétecteurs (A,B,C,D), on élabore à partir des signaux élémentaires (A,B,C,D) respectivement délivrés par les photodétecteurs deux signaux secondaires (A+C, B+D), échantillonnés et filtrés par des moyens de filtrage passe-bas (LPF1, LPF2) ayant une fréquence de coupure au plus égale au quart de la fréquence d'échantillonnage, dont le déphasage mutuel est représentatif de l'erreur de positionnement (TE) du faisceau par rapport à ladite piste, et **par le fait que** la détermination d'une valeur du déphasage mutuel comprend
la sélection, pour chaque signal secondaire (A+C, B+D), d'au moins une paire d'échantillons (ECHm, ECHM) situés à l'extérieur d'une plage d'amplitude prédéterminée (± TH) autour d'un seuil prédéterminé (SE), et permettant de repérer respectivement pour les deux signaux secondaires, deux transitions (ECH12, ECH20) de ces signaux secondaires par rapport au seuil et correspondant à un même sens de franchissement du seuil,
la détermination des deux transitions par interpolation à partir des échantillons sélectionnés, et
la détermination de l'écart temporel (ΔTi) entre les deux transitions.

2. Procédé selon la revendication 1, **caractérisé par le fait que** les signaux secondaires sont bruités et **par le fait que** l'amplitude (TH) de ladite plage est au moins égale au produit de l'amplitude maximale des signaux secondaires par le rapport bruit/signal.

3. Procédé selon la revendication 1 ou 2, **caractérisé par le fait que** l'amplitude (TH) de ladite plage est inférieure à la moitié de l'amplitude maximale des signaux secondaires.

4. Procédé selon l'une des revendications précédentes, **caractérisé par le fait que**, pour chaque signal secondaire, les échantillons sélectionnés permettant le repérage de la transition comporte une paire < d'échantillons situés de part et d'autre du seuil prédéterminé, à l'extérieur de la plage prédéterminée, et constituant respectivement un minimum local (ECHm) et un maximum local (ECHM) consécutifs du signal secondaire, et **par le fait que** l'ordre de l'occurence temporelle du minimum local et du maximum local doit être le même pour les deux paires d'échantillons relatives aux deux signaux secondaires.

5. Procédé selon la revendication 4, **caractérisé par le fait que** la détermination, pour chaque signal secondaire, de la transition comporte la mémorisation de ladite paire d'échantillons constituant respectivement un minimum local et un maximum local consécutifs du signal secondaire, et des échantillons intermédiaires (ECH1, ECH2) situés entre ces échantillons extrêmes, puis la sélection parmi ces échantillons intermédiaires, des deux échantillons intermédiaires situés de part et d'autre du seuil prédéterminé et au voisinage de ce seuil, et une interpolation entre ces deux échantillons intermédiaires sélectionnés de façon à obtenir un échantillon calculé (ECH12) dont le niveau correspond audit seuil (SE).

6. Procédé selon l'une des revendications 1 à 5, **caractérisé par le fait qu'**on utilise le signal global (A+B+C+D) contenant lesdites informations et délivré par le capteur pour contrôler la sélection des échantillons.

7. Dispositif pour l'asservissement d'un faisceau optique incident sur une piste d'un support mobile d'informations contenues dans ladite piste, **caractérisé par le fait qu'**il comprend un capteur (PHD) apte à capter le faisceau réfléchi par le support mobile et comportant plusieurs photodétecteurs, un premier étage de traitement (ET1) relié au capteur et comportant des moyens d'échantillonnage (CAN) et des moyens de filtrage passe-bas (LPF1, LPF2) ayant une fréquence de coupure au plus égale au quart de la fréquence d'échantillonnage, et apte à élaborer à partir des signaux élémentaires respectivement délivrés par les photodétecteurs deux signaux secondaires, échantillonnés et filtrés (A+C, B+D), dont le déphasage mutuel est représentatif de l'erreur de positionnement du faisceau par rapport à ladite piste, et un deuxième étage de traitement (ET2), relié à la sortie du premier étage, et comportant
des moyens de sélection (MSL1, MSL2) aptes à sélectionner, pour chaque signal secondaire, au moins une paire d'échantillons (ECHm, ECHM) situés à l'extérieur d'une plage d'amplitude prédéterminée autour d'un seuil prédéterminé, les échantillons sélectionnés permettant de repérer respectivement pour les deux signaux secondaires, deux transitions de ces signaux secondaires par rapport au seuil et correspondant à un même sens de franchissement du seuil,
des moyens d'élaboration (MIT1, MIT2) aptes à déterminer les deux transitions par interpolation à partir des échantillons sélectionnés, et
des moyens de calcul (MC) aptes à déterminer l'écart temporel (ΔTi) entre les deux transitions, de façon à déterminer une valeur du déphasage mutuel.

8. Dispositif selon la revendication 7, **caractérisé par le fait que** les signaux secondaires sont bruités et **par le fait que** l'amplitude (TH) de ladite plage est au moins égale au produit de l'amplitude maximale des signaux secondaires par le rapport bruit/signal, et de préférence inférieure à la moitié de l'amplitude maximale des signaux secondaires.

9. Dispositif selon la revendication 7 ou 8, **caractérisé par le fait que** le deuxième étage de traitement (ST2) comporte des moyens de mémoire aptes à mémoriser les échantillons sélectionnés pour chaque signal secondaire,
**par le fait que** les échantillons sélectionnés permettant le repérage de la transition comporte une paire d'échantillons situés de part et d'autre du seuil prédéterminé, à l'extérieur de la plage prédéterminée, et constituant respectivement un minimum local (ECHm) et un maximum local (ECHM) consécutifs du signal secondaire, l'ordre de l'occurence temporelle du minimum local et du maximum local étant le même pour les deux paires d'échantillons relatives aux deux signaux secondaires,
**par le fait que** les moyens d'élaboration sont aptes à stocker dans les moyens de mémoire, pour chaque signal secondaire, les échantillons intermédiaires situés entre ces échantillons extrêmes, puis à sélectionner parmi ces échantillons intermédiaires, les deux échantillons intermédiaires (ECH1, ECH2) situés de part et d'autre du seuil prédéterminé et au voisinage de ce seuil,
**par le fait que** les moyens d'élaboration comportent des moyens d'interpolation (MIT1, MIT2) aptes à effectuer une interpolation entre les deux échantillons intermédiaires sélectionnés de chaque signal secondaire de façon à déterminer, pour chaque signal secondaire, un échantillon calculé (ECH12, ECH20) dont le niveau correspond audit seuil,
et **par le fait que** les moyens de calcul déterminent l'erreur de positionnement à partir des deux échantillons calculés.

10. Dispositif selon l'une des revendications 7 à 9, **caractérisé par le fait que** le deuxième étage de traitement (ET2) comporte un filtre médian de longueur trois (FM), relié à la sortie des moyens de calcul (MC), suivi d'un filtre interpolateur (FPB).

## Claims

1. Process for slaving an incident optical beam to a track of a mobile carrier of information contained in the said track, **characterized in that** the beam reflected by the mobile carrier is picked up by means of an optical pickup (PHD) comprising several photodetectors (A, B, C, D), the elementary signals (A, B, C, D) respectively delivered by the photodetectors are used to formulate two secondary signals (A+C, B+D), sampled and filtered by low-pass filtering means (LPF1, LPF2) having a cutoff frequency at most equal to a quarter of the sampling frequency, the mutual phase shift of which is representative of the positioning error (TE) of the beam with respect to the said track, and **in that** the determination of a value of the mutual phase shift comprises
the selecting, for each secondary signal (A+C, B+D), of at least one pair of samples (ECHm, ECHM) situated outside a predetermined amplitude range (±TH) around a predetermined threshold (SE), and making it possible to tag, respectively for the two secondary signals, two transitions (ECH12, ECH20) of these secondary signals with respect to the threshold and corresponding to one and the same direction of crossing of the threshold,
the determining of the two transitions by interpolation from the selected samples, and
the determining of the time gap (ΔTi) between the two transitions.

2. Process according to Claim 1, **characterized in that** the secondary signals are noisy and **in that** the amplitude (TH) of the said range is at least equal to the product of the maximum amplitude of the secondary signals times the noise/signal ratio.

3. Process according to Claim 1 or 2, **characterized in that** the amplitude (TH) of the said range is less than half the maximum amplitude of the secondary signals.

4. Process according to one of the preceding claims, **characterized in that**, for each secondary signal, the selected samples allowing the tagging of the transition comprise a pair of samples situated on either side of the predetermined threshold, outside the predetermined range, and respectively constituting a local minimum (ECHm) and a local maximum (ECHM) which follow the secondary signal, and **in that** the order of the temporal occurrence of the local minimum and of the local maximum must be the same for the two pairs of samples relating to the two secondary signals.

5. Process according to Claim 4, **characterized in that** the determining, for each secondary signal, of the transition comprises the storing of the said pair of samples respectively constituting a local minimum and a local maximum which follow the secondary signal, and of the intermediate samples (ECH1, ECH2) situated between these extreme samples, then the selecting from among these intermediate samples, of the two intermediate samples situated on either side of the predetermined threshold and in the neighbourhood of this threshold, and an interpolation between these two selected intermediate samples so as to obtain a calculated sample (ECH12) whose level corresponds to the said threshold (SE).

6. Process according to one of Claims 1 to 5, **characterized in that** the overall signal (A+B+C+D) containing the said information and delivered by the pickup is used to control the selecting of the samples.

7. Device for slaving an incident optical beam to a track of a mobile carrier of information contained in the said track, **characterized in that** it comprises a pickup (PHD) able to pick up the beam reflected by the mobile carrier and comprising several photodetectors, a first processing stage (ET1) linked to the pickup and comprising sampling means (ADC) and low-pass filtering means (LPF1, LPF2) having a cutoff frequency at most equal to a quarter of the sampling frequency and able to use the elementary signals respectively delivered by the photodetectors to formulate two secondary signals, sampled and filtered (A+C, B+D), whose mutual phase shift is representative of the positioning error of the beam with respect to the said track, and a second processing stage (ET2), linked to the output of the first stage, and comprising
selection means (MSL1, MSL2) able to select, for each secondary signal, at least one pair of samples (ECHm, ECHM) situated outside a predetermined amplitude range around a predetermined threshold, the selected samples making it possible to tag, respectively for the two secondary signals, two transitions of these secondary signals with respect to the threshold and corresponding to one and the same direction of crossing of the threshold,
formulating means (MIT1, MIT2) able to determine the two transitions by interpolation from the selected samples, and
calculation means (MC) able to determine the time gap (ΔTi) between the two transitions, so as to determine a value of the mutual phase shift.

8. Device according to Claim 7, **characterized in that** the secondary signals are noisy and **in that** the amplitude (TH) of the said range is at least equal to the product of the maximum amplitude of the secondary signals times the noise/signal ratio, and preferably less than half the maximum amplitude of the secondary signals.

9. Device according to Claim 7 or 8, **characterized in that** the second processing stage (ST2) comprises memory means able to store the selected samples for each secondary signal,
**in that** the selected samples allowing the tagging of the transition comprise a pair of samples situated on either side of the predetermined threshold, outside the predetermined range, and respectively constituting a local minimum (ECHm) and a local maximum (ECHM) which follow the secondary signal, the order of the temporal occurrence of the local minimum and of the local maximum being the same for the two pairs of samples relating to the two secondary signals,
**in that** the formulating means are able to store in the memory means, for each secondary signal, the intermediate samples situated between these extreme samples, then to select, from among these intermediate samples, the two intermediate samples (ECH1, ECH2) situated on either side of the predetermined threshold and in the neighbourhood of this threshold,
**in that** the formulating means comprise interpolation means (MIT1, MIT2) able to perform an interpolation between the two selected intermediate samples of each secondary signal so as to determine, for each secondary signal, a calculated sample (ECH12, ECH20) whose level corresponds to the said threshold,
and **in that** the calculation means determine the positioning error from the two calculated samples.

10. Device according to one of Claims 7 to 9, **characterized in that** the second processing stage (ET2) comprises a median filter of length three (FM), linked to the output of the calculation means (MC), and followed by an interpolator filter (FPB).

## Patentansprüche

1. Verfahren zur Steuerung eines Lichtstrahls, der auf eine Daten enthaltende Spur eines beweglichen Datenträgers einfällt,
**dadurch gekennzeichnet, daß**
man den von dem beweglichen Träger reflektierten Strahl mit Hilfe eines optischen Aufnehmers (PHD) aufnimmt, der mehrere Photodetektoren (A,B,C,D) aufweist,
man ausgehend von elementaren Signalen (A,B,C,D), die jeweils von den Photodetektoren ausgegeben werden, zwei abgetastete und mit Hilfe von Tiefpaßfiltereinrichtungen (LPF1, LPF2) einer Grenzfrequenz von höchstens gleich einem Viertel der Abtastfrequenz gefilterte sekundäre Signale (A+C, B+D) ausarbeitet, deren gegenseitige Phasenverschiebung repräsentativ für den Positionierungsfehler (TE) des Strahls bezüglich der Spur ist, und
**dadurch**, daß die Bestimmung eines Werts der gegenseitigen Phasenverschiebung aufweist:
für jedes sekundäre Signal (A+C, B+D) die Auswahl mindestens eines Paars von Abtastwerten (ECHm, ECHM), die außerhalb eines vorgegebenen Amplitudenbereichs (±TH) um eine vorgegebene Schwelle (SE) herum liegen und erlauben, für die zwei sekundären Signale zwei Übergänge (ECH12, ECH20) dieser sekundären Signale über die Schwelle, die einem Überschreiten der Schwelle in eine gleiche Richtung entsprechen, zu lokalisieren,
die Bestimmung der zwei Übergänge durch Interpolation ausgehend von den ausgewählten Abtastwerten, und
die Bestimmung des Zeitabstands (ΔTi) zwischen den zwei Übergängen.

2. Verfahren nach Anspruch 1, **dadurch gekennzeichnet, daß** die sekundären Signale verrauscht sind und **dadurch**, daß die Amplitude (TH) des Bereichs mindestens gleich dem Produkt aus der maximalen Amplitude der sekundären Signale und dem Rauschen/Signal-Verhältnis ist.

3. Verfahren nach Anspruch 1 oder 2, **dadurch gekennzeichnet, daß** die Amplitude (TH) des Bereichs kleiner als die Hälfte der maximalen Amplitude der sekundären Signale ist.

4. Verfahren nach einem der vorstehenden Ansprüche, **dadurch gekennzeichnet, daß** für jedes sekundäre Signal die ausgewählten Abtastwerte, die das Lokalisieren des Übergangs erlauben, ein Paar von Abtastwerten aufweisen, die außerhalb des vorgegebenen Bereichs beiderseits der vorgegebenen Schwelle liegen und jeweils ein aufeinanderfolgendes lokales Minimum (ECHm) und lokales Maximum (ECHM) des sekundären Signals bilden, und **dadurch**, daß die Reihenfolge des zeitlichen Auftretens des lokalen Minimums und des lokalen Maximums für die den zwei sekundären Signalen zugeordneten zwei Abtastwertpaare gleich sein muß.

5. Verfahren nach Anspruch 4, **dadurch gekennzeichnet, daß** für jedes sekundäre Signal die Bestimmung des Übergangs aufweist:
die Speicherung des Paars von Abtastwerten, die jeweils ein aufeinanderfolgendes lokales Minimum und lokales Maximum des sekundären Signals bilden, und von zwischen diesen extremen Abtastwerten liegenden Zwischenabtastwerten (ECH1, ECH2),
dann die Auswahl von zwei beiderseits der vorgegebenen Schwelle und benachbart zu dieser Schwelle liegenden Zwischenabtastwerten aus diesen Zwischenabtastwerten und
eine Interpolation zwischen diesen zwei ausgewählten Zwischenabtastwerten, um einen berechneten Abtastwert (ECH12) zu gewinnen, dessen Pegel der Schwelle (SE) entspricht.

6. Verfahren nach einem der Ansprüche 1 bis 5, **dadurch gekennzeichnet, daß** man das die Daten enthaltende und von dem Aufnehmer ausgegebene globale Signal (A+B+C+D) verwendet, um die Auswahl der Abtastwerte zu steuern.

7. Vorrichtung zur Steuerung eines Lichtstrahls, der auf eine Daten enthaltende Spur eines beweglichen Datenträgers einfällt, **dadurch gekennzeichnet, daß** sie aufweist:
einen Aufnehmer (PHD), der in der Lage ist, den von dem beweglichen Träger reflektierten Strahl aufzunehmen, und der mehrere Photodetektoren aufweist,
eine mit dem Aufnehmer verbundene erste Verarbeitungsstufe (ET1), die Abtasteinrichtungen (CAN) und Tiefpaßfiltereinrichtungen (LPF1, LPF2) einer Grenzfrequenz von höchstens gleich einem Viertel der Abtastfrequenz aufweist und die in der Lage ist, ausgehend von elementaren Signalen, die jeweils von den Photodetektoren ausgegeben werden, zwei abgetastete und gefilterte sekundäre Signale (A+B, C+D) auszuarbeiten, deren gegenseitige Phasenverschiebung repräsentativ für den Positionierungsfehler des Strahls bezüglich der Spur ist, und
eine mit dem Ausgang der ersten Stufe verbundene zweite Verarbeitungsstufe (ET2), die aufweist:
Auswahleinrichtungen (MSL1, MSL2), die in der Lage sind, für jedes sekundäre Signal mindestens ein Paar von Abtastwerten (ECHm, ECHM) auszuwählen, die außerhalb eines vorgegebenen Amplitudenbereichs um eine vorgegebene Schwelle herum liegen, wobei die ausgewählten Abtastwerte erlauben, für die zwei sekundären Signale zwei Übergänge dieser sekundären Signale über die Schwelle, die einem Überschreiten der Schwelle in eine gleiche Richtung entsprechen, zu lokalisieren,
Ausarbeitungseinrichtungen (MIT1, MIT2), die in der Lage sind, ausgehend von den ausgewählten Abtastwerten die zwei Übergänge durch Interpolation zu bestimmen, und
Berechnungseinrichtungen (MC), die in der Lage sind, den zeitlichen Abstand (ΔTi) zwischen den zwei Übergängen zu bestimmen, um einen Wert der gegenseitigen Phasenverschiebung zu bestimmen.

8. Vorrichtung nach Anspruch 7, **dadurch gekennzeichnet, daß** die sekundären Signale verrauscht sind, und **dadurch**, daß die Amplitude (TH) des Bereichs mindestens gleich dem Produkt aus der maximalen Amplitude der sekundären Signale und dem Rausch/ Signal-Verhältnis ist und bevorzugt kleiner als die Hälfte der maximale Amplitude der sekundären Signale ist.

9. Vorrichtung nach Anspruch 7 oder 8, **dadurch gekennzeichnet, daß**
die zweite Verarbeitungsstufe (ST2) Speichereinrichtungen aufweist, die in der Lage sind, für jedes sekundäre Signal die ausgewählten Abtastwerte zu speichern,
**dadurch**, daß die ausgewählten Abtastwerte, die das Lokalisieren des Übergangs erlauben, ein Paar von Abtastwerten aufweisen, die beiderseits der vorgegebenen Schwelle außerhalb des vorgegebenen Bereichs liegen und jeweils ein aufeinanderfolgendes lokales Minimum (ECHm) und lokales Maximum (ECHM) bilden, wobei für die den zwei sekundären Signalen zugeordneten zwei Abastwertpaare die Reihenfolge des zeitlichen Auftretens des lokalen Minimums und des lokalen Maximums gleich ist,
**dadurch**, daß die Ausarbeitungseinrichtungen in der Lage sind, für jedes sekundäre Signal die zwischen diesen extremen Abtastwerten liegenden Zwischenabtastwerte in den Speichereinrichtungen zu speichern, dann aus diesen Zwischenabtastwerten die zwei Zwischenabtastwerte (ECH1, ECH2) auszuwählen, die beiderseits der vorgegebenen Schwelle und benachbart zu dieser Schwelle liegen,
**dadurch**, daß die Ausarbeitungseinrichtungen Interpolationseinrichtungen (MIT1, MIT2) aufweisen, die in der Lage sind, eine Interpolation zwischen den zwei ausgewählten Zwischenabtastwerten jedes sekundären Signals durchzuführen, um für jedes sekundäre Signal einen berechneten Abtastwert (ECH12, ECH20) zu bestimmen, dessen Pegel der Schwelle entspricht,
und **dadurch**, daß die Berechnungseinrichtungen den Positionierungsfehler ausgehend von den zwei berechneten Abtastwerten bestimmen.

10. Vorrichtung nach einem der Ansprüche 7 bis 9, **dadurch gekennzeichnet, daß** die zweite Verarbeitungsstufe (ET2) ein mit dem Ausgang der Berechnungseinrichtungen (MC) verbundenes Mittelungsfilter (FM) der Länge drei, gefolgt von einem Interpolationsfilter (FPB), aufweist.
